(19) Europäisches Patentamt / European Patent Office / Office européen des brevets

(11) **EP 2 075 512 B1**

(12) **EUROPEAN PATENT SPECIFICATION**

(45) Date of publication and mention
of the grant of the patent:
**27.06.2018 Bulletin 2018/26**

(21) Application number: **07816550.3**

(22) Date of filing: **12.10.2007**

(51) Int Cl.:
*F24F 3/16* (2006.01)      *F24F 13/28* (2006.01)
*B01D 53/88* (2006.01)

(86) International application number:
**PCT/CN2007/002936**

(87) International publication number:
**WO 2008/046306 (24.04.2008 Gazette 2008/17)**

(54) **AIR PURIFIER**

LUFTREINIGER

PURIFICATEUR D'AIR

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **16.10.2006 CN 200610137408**

(43) Date of publication of application:
**01.07.2009 Bulletin 2009/27**

(73) Proprietor: **Akos Advanced Technology Ltd.
Shatin, N.T. Hong Kong (CN)**

(72) Inventors:
• **CHAN, Yiu Wai
Shatin, N.T. Hong Kong (CN)**
• **LAW, Sui Chun
Shatin, N.T. Hong Kong (CN)**

(74) Representative: **Vogel, Andreas et al
Bals & Vogel
Universitätsstrasse 142
44799 Bochum (DE)**

(56) References cited:
CN-Y- 2 515 579       JP-A- 10 253 096
JP-A- 10 253 096      JP-A- 2001 061 947
US-A- 4 221 575       US-A- 5 707 005

**Description**

**Technical field**

This invention relates to the field of environmental protection. More specifically this invention relates to an intelligent apparatus that can be applied in air purification.

**Background of the invention**

The air pollutants exist in two major physical phases. The particle phase pollutants are pollutants with significant physical sizes, they include dust particles, airborne bacteria and mold. They may be composed and be bound together by different matters with different compositions. The gaseous phase pollutants are pollutants with simple chemical structures. The size of the gaseous phase pollutants are small from angstrom to nano-scale. Odor molecules and volatile organic compounds belong to gaseous phase pollutants.

To eliminate the particle phase pollutants or pollutants with significant physical sizes, electrostatic precipitator or high efficiency particulate air filter are always employed. The removal efficiency could reach to 80% or sometimes 99.9%. Nevertheless, it is always not easy to remove the gases phase pollutants.

The oxidants, such as ozone and hydroxyl radicals, which are generated from the ozone generator or ionizer are very good reactant. They can decompose the harmful and small molecular matters and have been employed widely for air purification. Nevertheless, the rate of air purification depends on the concentration of the oxidants. When the ozone and hydroxyl radical are released directly to the air, their concentrations will be diluted immediately. On another hand, they will bombard with other non-target molecules in the fluid and become decayed. Therefore, they cannot effectively oxidize the pollutants and organic molecules. Owing to this reason, most ionizers cannot purify the air effectively. Only high concentration of ozone can clean the air effectively. To solve the above mentioned problem, some air purifiers have employed catalyst for air cleaning. For example, when photo-catalyst is being irradiated under the UV lamp, oxidant will be generated, oxidation or reduction reaction of the pollutants will be carried out. There are also some air purification methods which involve the adsorption the pollutants into the pores of the molecular sieves, based on the size, orientation, shape, and hydrophilicity of the molecule of the pollutants. Inside the pores of the molecular sieves, chemical reactions are being carried out and the pollutants are decomposed.

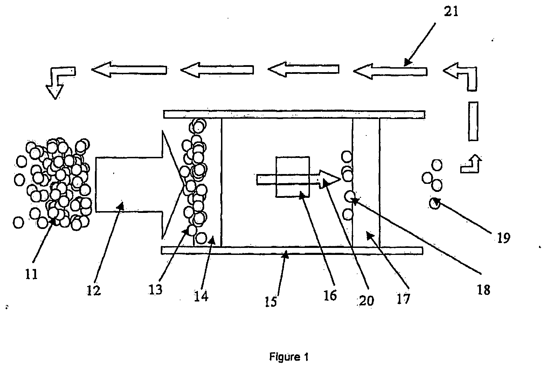

In these air purification systems, the two pollutant phases are drawn into the systems at the same time. Particle phase pollutants will firstly be trapped in the particle filter, and the gaseous phase pollutants are drawn into the catalyst filtering core, where chemical reaction are to be carried out for decomposing the gaseous phase pollutants. Nevertheless, even the high efficiency particulate air filter with the highest efficiency cannot remove all particles phase pollutants. In adverse and heavy polluted areas, such as smoking area, the drawn-in polluted air into the system containing particle filter and catalyst filtering core (as shown in figure 1) would lead to a result that the un-filtered particles will be deposited on the surface of the catalyst, blocking their active sites and hindering the catalytic reaction. As a result, the gaseous phase pollutants cannot be eliminated effectively. The accumulation of the particle phase pollutants on the surface of the catalyst could lead to other problems, such as becoming an incubation area for the growth of bacteria. As a result, turning on these air purifiers, which contain the contaminated catalyst filtering core, would release the originally collected pollutants (e.g, bacteria, odor, dust etc.). People might try to solve this problem by frequent filter replacement. This is environmentally un-friendly as the unwanted contaminated catalyst filtering core creates a secondary pollution problem. US Patent 5707005 discloses an air conditioning unit comprising a dust cleaning apparatus, dampers, a filtering core, an exhaust fan and a dust level sensor, where the dampers can be arranged to bypass the filtering core according to a signal from the dust level sensor. However, it discloses neither a reactant generator nor a catalyst filtering core.

**Summary of the invention**

In the present intelligent air purification system, different phases of pollutants in the air will be purified separately at different time duration. The larger size particle phase pollutants will firstly be treated and until its concentration reaches to a satisfactory level, then the smaller size pollutants and gaseous phase pollutants will be treated. The present invention offers an outstanding air purification method, when comparing to the traditional air purification system where the pollutants in the air are forced to pass through the particles filter and gaseous phase filter at one time and leading to the blocking of gaseous filter and decline in its function. The present invention provides a method of air purification which is highly effective, environmentally friendly, and able to reduce the chance of secondary pollutions.

The present invention is put into practice with an apparatus for air purification according to claim 1. The dust cleaning apparatus shall be able to remove dust with physical sizes above or around 0.01 $\mu$m.

The dust cleaning apparatus includes an electrostatic precipitator.
The dust cleaning apparatus includes high efficiency particulate air filter. When the catalyst filtering core is a molecular sieve filter, the reactant generator is a UV sterilizer lamp which is capable of generating ozone.

With this design, besides further enhancing the bacteria killing function, the ozone generated becomes the oxidant for the reaction in the molecular sieve.

When the catalyst filtering core is a molecular sieve filter, the reactant generator is an oxidant generator. This is because some gaseous phase pollutants can be decomposed only when undergoing the oxidation reaction.

When the catalyst filtering core is a molecular sieve filter, the reactant generator is a reactant generator. This is because some gases phase pollutants can be decomposed only when undergoing the reduction reaction.

When the catalyst filtering core is a titanium dioxide filter, the reactant generator can be an oxidant generator.

When the catalyst filtering core is a titanium dioxide filter, the reactant generator is a UV sterilizer lamp and irradiates on the surface of the titanium dioxide filter with an effective wavelength. The UV sterilizer will provide strong enough energy for the oxidation reaction of the pollutants on the surface of the titanium dioxide filter.

A high efficiency particulate air filter can be installed on top of the molecular sieve filter. When the valve is closed, all the air is forced to pass through the molecular sieve filter, the high efficiency particulate air filter acts as a final protection for the molecular sieve filter. The UV sterilizer lamp irradiates on the surface of the high efficiency particulate air filter, and prevents any chance of bacteria incubation, on the surface of the high efficiency particulate air filter.

The dust level sensor is used to obtain the dust level of the surrounding environment. The data of dust level is then input to the central processing unit. The central processing unit controls the open and close action of the valve. The judgment of the central processing unit is by comparing the dust level obtained with the pre-set value. When the dust level obtained is higher than the pre-set value, it indicates that the dust level of the surroundings is high. The electrostatic precipitator and high efficiency particulate air filter cannot remove all dust particles at a time, which would contaminate the catalyst filtering core. Therefore, it is necessary to open the valve and treat all dust particles first. When the dust level is lower than the pre-set value, it indicates the dust level of the surroundings come to a satisfactory level, the electrostatic precipitator and high efficiency particulate air filter can remove all dust particle at a time. The valve can then be closed and the air purification shall focus on the removal of the gaseous phase pollutants.

The air purification apparatus shall also contain an odor level sensor and central processing unit.

The odor level sensor measures the concentration of the volatile organic compounds in the surroundings. The concentration is then input to the central processing unit for further judgment and control the speed of the exhaust fan. With this design, different levels of gaseous phase pollutants can be treated by the air purification system intelligently.

The dust level sensor measures the concentration of dust of the surroundings for calculating the amount of dust being collected by the electrostatic precipitator. When the amount of the accumulated dust being held is higher than the pre-set value, the central processing unit will give out the alarm and reminds the user to clean the electrostatic precipitator.

The accumulation of the dust being collected by the electrostatic precipitator is calculated according to the following equation:

Total dust being held by the electrostatic precipitator

= (Speed of fan x the operation time of the air purification apparatus x the surrounding dust level) + the total dust being held by the electrostatic precipitator of the last operation.

The dust cleaning apparatus is capable of being taken off from the whole air purification apparatus for cleaning and maintenance purpose.

Owing to different environmental factors, different person has different perception and sensitivity on the levels of pollutants. Some people may be more sensitive toward the dust or odor levels. Therefore, besides employing the dust level sensor and central processing unit to control the open and close action of the valve, users can use his/her own judgment on sensitivity and control the valve manually, instead of using the dust level sensor.

This invention presents an air purification apparatus, the air flow path inside the apparatus is managed by controlling the open and close action of the valve, and to prevent the deposition of dust particle on the surface of the catalyst filtering core which would lead to non-function of the catalyst. The open and close action of valve, is actually based on the air quality assessment by the dust level sensor and the central processing unit. When the dust level of the surrounding air is in an un-satisfactory level, the central processing unit would give instruction to open the valve. The reactant generator will be turned off. This could prevent the leakage of the reactants when the catalyst filtering core is not in operation. When the dust level in air reaches to a satisfactory level, the central processing unit would give instruction to close the valve, and turn on the reactant generator. Reactants are generated and react with the gaseous phase organic pollutants on the surface of the catalyst filtering core. The gaseous phase pollutants would then be decomposed. This invention can help to eliminate the particle phase and gaseous phase pollutants orderly and intelligently. The lifespan of the catalyst filtering core is extended. The secondary pollution will be avoided. A real environment protection purpose is achieved.

**Brief Description of the Drawings**

Figure 1 is a schematic diagram of the internal structure of the conventional air purification apparatus
Figure 2 is a flowchart of the present invention about the procedure of controlling the valve by the central processing unit
Figure 3 is a schematic diagram of the present invention in one embodiment
Figure 4 is a schematic diagram of the present invention in another embodiment
Figure 5 is a chart comparing the performance of air purification by the apparatus of present invention and that of the conventional system.
Figure 6 is a picture of the present invention showing the internal structure of a real embodiment

**Details Description of the Drawings**

Referring to Figure 1, the conventional air purification apparatus comprising a casing 15, main part for dust removal 14 such as electrostatic precipitator or high efficiency particulate air filter, a reactant generator 16 and a catalyst filtering core 17. The reactant generator 16 would be able to generate ozone, gives out UV irradiation which is able to kill the bacteria, or oxidant generator. When the catalyst filtering core 17 is filter of titanium dioxide, the reactant generator 16 is an oxidant generator or a UV lamp that can give out UV light with effective wavelength and irradiates directly on the surface of the titanium dioxide 17. A exhaust fan is installed in any position which draws the air from air upstream position 12 to downstream position 20. When the air stream passes through the electrostatic precipitator or high efficiency particulate air filter 14, most dust or particulate matters 11 are being collected and being removed 13. The remaining dust and particulate matters in the air stream will be deposited on the surface 18 of the catalyst filtering core 17, after passing through the reactant generator 16. The catalyst filtering core 17 is therefore become non-functioning due to the contamination.

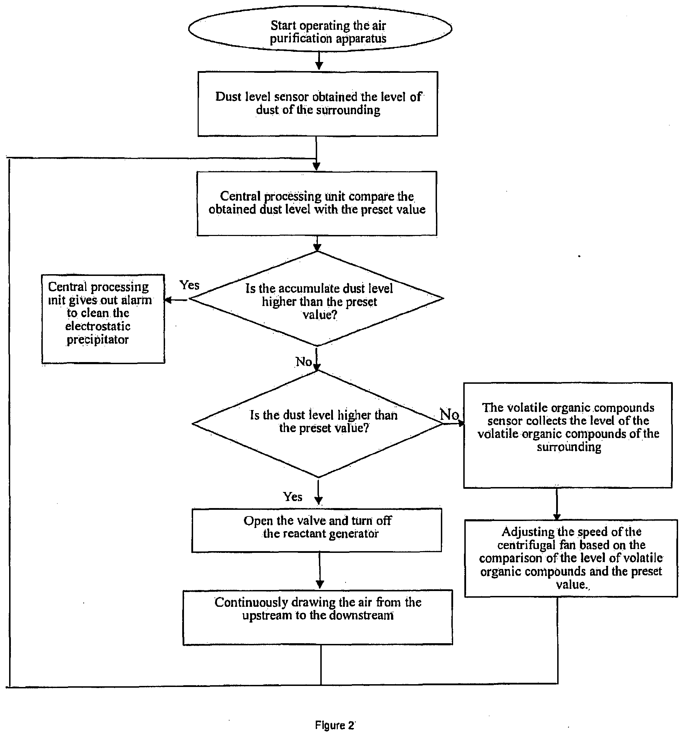

Referring to Figure 2, the operation procedure of valve by the central processing unit of the air purification is shown. Dust Sensor and the dust level of the surrounding environment would be employed for the calculation on the amount of the collectable dust by the electrostatic precipitator. When the amount of dust collected by the electrostatic precipitator has reached to a pre-determined value, the central processing unit will give alarm to warn the user to clean the electrostatic precipitator. The central processing unit will also compare the dust level of the surrounding environment with another predetermined value. When the dust level is higher than the predetermined value, the valve will be opened and the reactant generator will be turned off. The air will be drawn continuously from the upstream position to the downstream position, until the dust level of the surrounding environment has reached to a satisfactory level. Then, the sensor of volatile organic compounds will collect the level of volatile organic compounds of the surroundings. Based on the level of the volatile organic compounds, the reaction time for their breaking down will be estimated and the speed of the exhaust fan within the air purification apparatus would be adjusted accordingly. Thus, the apparatus would clean the air according the levels of the pollutants intelligently.

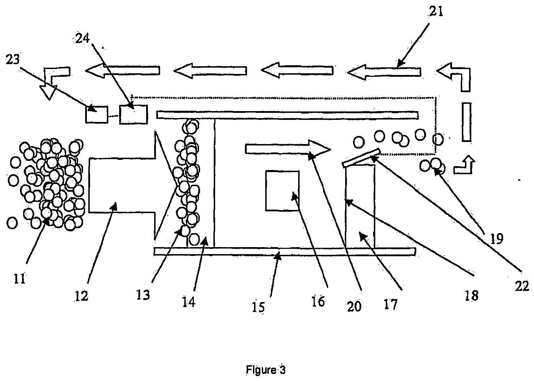

Referring to Figure 3, schematic diagram of the present invention in one embodiment is shown as follows:
An air purification apparatus, comprises a casting 15, main part for dust removal 14 such as electrostatic precipitator or high efficiency particulate air filter, a valve 22 for controlling the path of airflow within the air purification apparatus, a reactant generator 16 and a catalyst filtering core 17, dust sensor 23 and central processing unit 24. The dust sensor 23 is connected to the central processing unit 24, the central processing unit 24 is connected to the valve 22 and controls its close and open status. The catalyst filtering core 17 is molecular sieves filter. The reactant generator 16 can be a UV lamp that emits the ozone and gives out UV light at wavelength which is suitable for killing the bacteria. High efficiency particulate air filter can be installed at the upstream position of the molecular sieves filter 17. The UV lamp would then irradiate on the surface of the high efficiency particulate air filter and prevent the bacteria from being incubated on the dust surface of the filter. When titanium dioxide is employed as the catalyst filtering core 17, the reactant generator 16 can be an oxidant generator or a UV lamp which could emit UV light at effective wavelength for irradiating on the surface of the titanium dioxide.

The exhaust fan can be placed at any position within the apparatus and it draws the air to flow from the upstream position 12 to the downstream position 13. The bigger dust particulates 11 would be already removed 13 when the air passes through the electrostatic precipitator or the high efficiency particulate air filter 14. The remaining dust particulates at smaller size would pass through the reactant generator 16, the valve 22 and then leave. They would not deposit on the surface 18 of the catalyst filtering core 17. The catalyst filtering core 17 therefore would not be contaminated and would not become non-function.

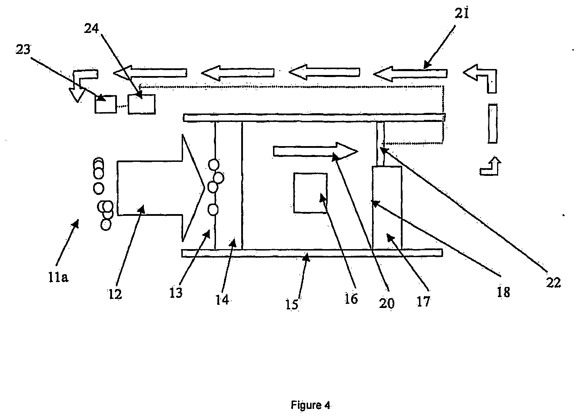

Referring to Figure 4, a schematic diagram of the present invention in another embodiment is shown. When the dust level of the surrounding environment is found to reach to a satisfactory level 11a by the dust sensor 23, the central processing unit 24 would give instruction and close the valve 22. The valve 22 would then become the same level as the catalyst filtering core 17. The reactant generator 16 is then turned on. After passing through the electrostatic precipitator 14 and the reactant generator 16, the air is then forced to pass through the catalyst filtering core 17. The reactant generated and the gaseous phase pollutant will therefore be adsorbed into the catalyst filtering core 17. Therein, the decomposition reactions of gaseous phase pollutants happen.

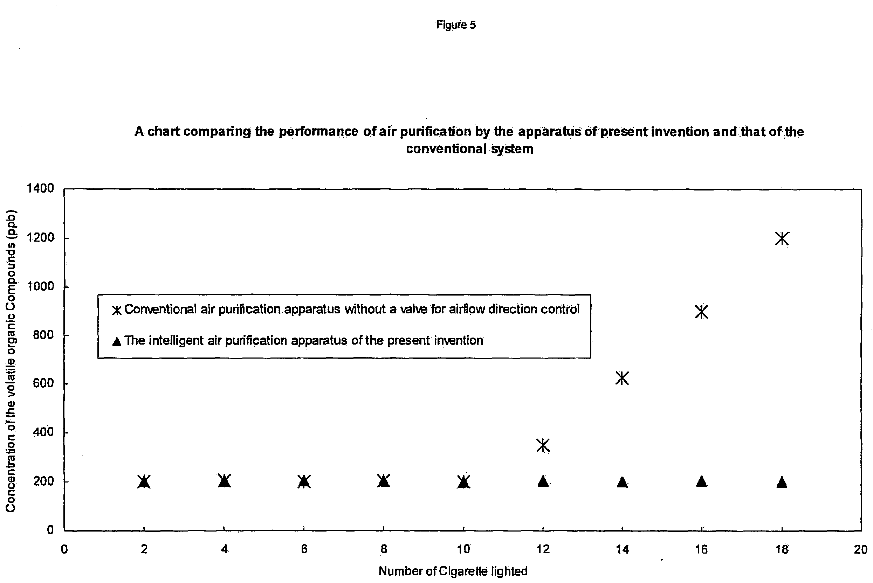

Referring to Figure 5, a chart comparing the performance of air purification by the apparatus of present invention and that of the conventional system is shown. This testing was carried out in a smoking room with a size of 200 square feet, with head room height of 3 meters. When the air purification apparatus of Figure 1 was employed in the testing, the removal performance of volatile organic compounds by the air purification apparatus became ineffective when the tenth cigarette was lighted. The pollutants, which accumulated in the filter, were even released to the surroundings. The pollutant level of the surroundings therefore increased. With the application of the air purification apparatus of the present invention (the air purification apparatus that mentioned in Figure 3 and Figure 4), the pollutants were treated effectively and orderly. The catalyst filtering core, which is purposely for treating the gaseous phase pollutants, was not contaminated and did not become non-function. Therefore, the air purification apparatus could treat the pollutants in pro-long operation.

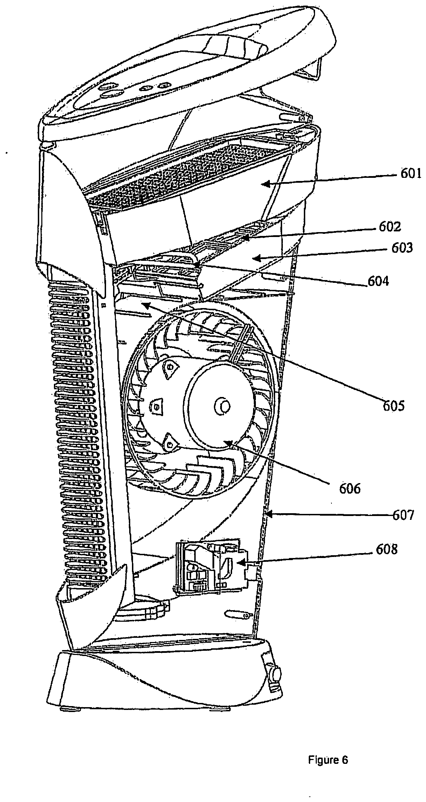

Referring to Figure 6, a picture of the present invention showing the internal structure of a real embodiment is presented. The body of the apparatus comprises a casing 607, a exhaust fan 606, an electrostatic precipitator 601 working as a dust cleaning apparatus in the present apparatus, a UV lamp 604, which is capable of emitting ozone and give out UV light at wavelength which is effective for killing the bacteria, working as reactant generator in the present apparatus, a closely and tightly packed molecular sieves filter 603 working as the catalyst filtering core. On the top of the catalyst filtering core, high efficiency particulate air filter 602 can be installed. The UV lamp can be orientated in such a way to irradiate on the surface of the high efficiency particulate air filter 602 to increase the bacteria killing effect. The valve 605 is equipped at the same level as the catalyst filtering core. When the dust level is high, the valve 605 will open. The air will not pass through the catalyst filtering core 603 and flow out. The air purification apparatus therefore treats the high-level particle phase pollutant in a higher priority manner.

## Claims

1. An apparatus (10) for air purification, comprising a casing (15), wherein the casing (15) includes an air inlet and an air outlet, and wherein inside the casing (15) following components are equipped:

   (i) a dust cleaning apparatus (14)
   (ii) a valve (22) for controlling the airflow path within the casing (15),
   (iii) a reactant Generator
   (iv) a catalyst filtering core (17),
   (v) an exhaust fan for drawing the air,
   (vi) a dust level sensor (23), and
   (vii) a central processing unit (24),

   wherein the dust cleaning apparatus (14) is installed at an upstream position (12) of the reactant Generator (16), the valve (22) and the catalyst filtering core (17) are installed at an downstream position (20) of the reactant Generator (16), wherein the exhaust fan is installed in any position within the apparatus (10) to draw the air to flow from the upstream position (12) to the downstream position (20), wherein, when the said valve (22) is closed, it would become the same level as the catalyst filtering core (17), so that the air must flow through the catalyst filtering core (17), after passing through the dust cleaning apparatus (14) and the reactant Generator (16) before flowing out, wherein, when the valve (22) is opened, it would become a resistant-free opening for the air to pass through, So that the air would then flow through this resistant-free opening instead of the catalyst filtering core (17), after passing through the dust cleaning apparatus (14) and the reactant Generator (16), wherein the reactant Generator (16) stop operating when the valve (22) is opened to prevent the leakage of reactant when the catalyst filtering core (17) is not in operation, and wherein the open and close action of the valve (22) is controlled by the dust level sensor (23) and the central processing unit (24) of the apparatus (10), so that,
when the dust level, obtained by the dust level sensor (23), is higher than a predetermined value, the valve is opened for treating all dust particles first, and when the surrounding dust level is lower than the predetermined value, the valve is closed and the air purification apparatus removes the gaseous phase pollutants.

2. An air purification apparatus (10) according to claim 1,
**characterized in that** the dust cleaning apparatus (14) is arranged to remove dust with physical sizes above or around 0.01 μm.

3. An air purification apparatus (10) according to claim 1,
**characterized in that** the dust cleaning apparatus (14) includes an electrostatic precipitator.

4. An air purification apparatus (10) according to claim 1,
**characterized in that** the dust cleaning apparatus (14) includes high efficiency particulate air filter.

5. An air purification apparatus (10) according to claim 1,
**characterized in that** when the catalyst filtering core (17) is a molecular sieve filter, the reactant Generator (16) is a UV sterilizer lamp which is capable of generating ozone.

6. An air purification apparatus (10) according to claim 1,
**characterized in that** when the catalyst filtering core (17) is a molecular sieve filter, the reactant Generator (16) is an oxidant generator.

7. An air purification apparatus (10) according to claim 1,
**characterized in that** when the catalyst filtering core (17) is a molecular sieve filter, the reactant Generator (16) is a reactant Generator (16).

8. An air purification apparatus (10) according to claim 1,
**characterized in that** when the catalyst filtering core (17) is a titanium dioxide filter, the reactant Generator (16) is an oxidant generator.

9. An air purification apparatus (10) according to claim 1,
**characterized in that** when the catalyst filtering core (17) is a titanium dioxide filter, the reactant Generator (16) is a UV sterilizer lamp and irradiates on the surface of the titanium dioxide filter with an effective wavelength.

10. An air purification apparatus (10) according to claim 1,
**characterized in that** a high efficiency particulate air filter is installed on top of the molecular sieve filter, wherein an UV sterilizer lamp irradiates on the surface of the high efficiency particulate air filter, and prevents any chance of bacteria incubation, on the surface of the high efficiency particulate air filter.

11. An air purification apparatus (10) according to claim 1,
**characterized in that** the dust level sensor (23) is used to obtain the dust level of the surrounding environment, wherein the data of dust level is then input to the central processing unit (24), and wherein the central processing unit (24) controls the open and close action of the valve (22).

12. An air purification apparatus (10) according to claim 1,
**characterized in that** an odor level sensor (25) and central processing unit (24) are included.

13. An air purification apparatus (10) according to claim 12,
**characterized in that** the odor level sensor (25) measures the concentration of the volatile organic compounds of the surroundings, wherein the concentration is then input to the central processing unit (24) for further judgment and control the speed of the exhaust fan.

14. An air purification apparatus (10) according to claim 1,
**characterized in that** the dust level sensor (23) measures the concentration of dust of the surroundings for calculating the amount of dust being collected by the dust cleaning apparatus (14), especially the electrostatic precipitator, wherein when the amount of the accumulated dust being held is higher than the pre-set value, the central processing unit (24) will give out the alarm and reminds the user to clean the electrostatic precipitator, and wherein the accumulation of the dust being collected by the dust cleaning apparatus (14), especially the electrostatic precipitator, is calculated according to the following equation:

Total dust being held by the electrostatic precipitator

= (Speed of fan x the operation time of the air purification apparatus (10) x the

surrounding dust level) + the total dust being held by the electrostatic precipitator of the last operation.

15. An air purification apparatus (10) according to claim 1,
**characterized in that** the dust cleaning apparatus (14) is capable of being taken off from the whole air purification apparatus (10) for cleaning and maintenance purpose.

16. An air purification apparatus (10) according to claim 1,
**characterized in that** besides employing the dust level sensor (23) and central processing unit (24) to control the open and close action of the valve (22), users can use his/her own judgment on sensitivity and control the valve (22) manually, instead of using the dust level sensor (23).


**Patentansprüche**

1. Vorrichtung (10) zur Luftreinigung, mit einem Gehäuse (15), wobei das Gehäuse einen Lufteintritt und einen Luftaustritt aufweist, und wobei das Innere des Gehäuses (15) mit folgenden Komponenten ausgestattet ist:

I) eine Staubreinigungseinrichtung (14),
II) ein Ventil (22) zur Regelung des Luftstroms innerhalb des Gehäuses (15),
III) einem Reaktandengenerator (16),
IV) einem Katalysatorfilterkern (17),
V) einem Abluftventilator zum Ansaugen der Luft,
VI) einem Staubpegelsensor (23), und
VII) einer Zentraleinheit (24),

wobei die Staubreinigungsvorrichtung (14) an einer stromaufwärts gelegenen Position (12) des Reaktandengenerators (16) installiert ist, und das Ventil (22) sowie der Katalysatorfilterkern (17) an einer stromabwärts gelegenen Position (20) des Reaktandengenerators (16) installiert ist, wobei der Abluftventilator in einer beliebigen Position innerhalb der Vorrichtung (10) installiert ist, um die Luft zum Strömen von der stromaufwärts gelegenen Position (12) in die stromabwärts gelegene Position (20) zu bringen, wobei, wenn das Ventil (22) geschlossen ist, es das gleiche Niveau wie der Katalysatorfilterkern (17) erreicht, sodass die Luft durch den Katalysatorfilterkern (17) strömen muss, nachdem sie die Staubreinigungsfunktion (14) und den Reaktandengenerator (16) durchströmt hat, bevor sie herausströmt, wobei, wenn das Ventil (22) geöffnet wird, es eine widerstandsfreie Öffnung für die Luft zum Durchströmen würde, sodass die Luft dann durch diese widerstandsfreie Öffnung anstelle des Katalysatorfilterkerns (17) strömen würde, nachdem sie die Staubreinigungsvorrichtung (14) und den Reaktandengenerator (16) durchströmt hat, wobei der Reaktandengenerator (16) den Betrieb stoppt, wenn das Ventil (22) geöffnet wird, um das Austreten des Reaktanden zu verhindern, wenn der Katalysatorfilterkern (17) nicht in Betrieb ist, und wobei die Öffnungs- und Schließbewegung des Ventils (22) durch den Staubpegelsensor (23) und die zentrale Verarbeitungseinheit (24) der Vorrichtung (10) gesteuert wird, sodass, wenn der Staubpegel, der durch den Staubpegelsensor (23) ermittelt wird, höher ist als ein vorbestimmter Wert, das Ventil (22) geöffnet wird, um zuerst alle Staub zu behandeln, und wenn der umgebende Staubpegel niedriger ist als der vorgegebene Wert, das Ventil (22) geschlossen wird und die Luftreinigungsvorrichtung (10) die in der Gasphase befindlichen Schadstoffe entfernt.

2. Luftreinigungsgerät (10) nach Anspruch 1,
**dadurch gekennzeichnet,**
**dass** die Staubreinigungsvorrichtung (14) dafür vorgesehen ist, Staub mit physikalischen Größen oberhalb oder um 0,01 $\mu$m herum zu entfernen.

3.  Luftreinigungsgerät (10) nach Anspruch 1,
    **dadurch gekennzeichnet,**
    **dass** die Staubreinigungsvorrichtung (14) einen Elektrofilter enthält.

4.  Luftreinigungsgerät (10) nach Anspruch 1,
    **dadurch gekennzeichnet,**
    **dass** die Staubreinigungsvorrichtung (14) einen Partikelluftfilter mit hohem Wirkungsgrad enthält.

5.  Luftreinigungsgerät (10) nach Anspruch 1,
    **dadurch gekennzeichnet,**
    **dass**, wenn der Katalysatorfilterkern (17) ein Molekularsiebfilter ist, der Reaktandengenerator (16) eine UV-Sterilisationslampe ist, die Ozon erzeugen kann.

6.  Luftreinigungsgerät (10) nach Anspruch 1,
    **dadurch gekennzeichnet,**
    **dass**, wenn der Katalysatorfilterkern (17) ein Molekularsiebfilter ist, der Reaktandengenerator (16) ein Oxydationsmittelgenerator ist.

7.  Luftreinigungsgerät (10) nach Anspruch 1,
    **dadurch gekennzeichnet,**
    wenn der Katalysatorfilterkern (17) ein Molekularsiebfilter ist, der Reaktandengenerator (16) ein Reaktandengenerator (16) ist.

8.  Luftreinigungsgerät (10) nach Anspruch 1,
    **dadurch gekennzeichnet,**
    **dass**, wenn der Katalysatorfilterkern (17) ein Titandioxidfilter ist, der Reaktandengenerator (16) ein Oxidationsmittelgenerator ist.

9.  Luftreinigungsgerät (10) nach Anspruch 1,
    **dadurch gekennzeichnet,**
    **dass**, wenn der Katalysatorfilterkern (17) ein Titandioxidfilter ist, der Reaktandengenerator (16) ein UV-Sterilisationslampe ist und die Oberfläche des Titandioxidfilters mit einer wirksamen Wellenlänge bestrahlt.

10. Luftreinigungsgerät (10) nach Anspruch 1,
    **dadurch gekennzeichnet,**
    **dass** an der Oberfläche des Molekularsiebfilters ein Partikelluftfilter mit hohem Wirkungsgrad installiert ist, wobei eine UV-Sterilisationslampe auf der Oberfläche des Partikelluftfilters mit hohem Wirkungsgrad eine Bestrahlung durchführt und jedwede Möglichkeit auf Bakterieninkubation auf der Oberfläche des Partikelluftfilters mit hohem Wirkungsgrad verhindert.

11. Luftreinigungsgerät (10) nach Anspruch 1,
    **dadurch gekennzeichnet,**
    **dass** der Staubpegelsensor (23) verwendet wird, um den Staubpegel in der umliegenden Umgebung zu erhalten, wobei die Daten des Staubpegels dann in die zentrale Verarbeitungseinheit (24) eingegeben werden, wobei die zentrale Verarbeitungseinheit (24) die Öffnungs- und Schließwirkung des Ventils (22) steuert.

12. Luftreinigungsgerät (10) nach Anspruch 1,
    **dadurch gekennzeichnet,**
    **dass** ein Geruchspegelsensor (25) und eine zentrale Verarbeitungseinheit (24) enthalten sind.

13. Luftreinigungsgerät (10) nach Anspruch 12,
    **dadurch gekennzeichnet,**
    **dass** der Geruchspegelsensor (25) die Konzentration der flüchtigen organischen Verbindungen der Umgebung misst, wobei die Konzentration dann der zentralen Verarbeitungseinheit (24) zugeführt wird, um die Geschwindigkeit des Abluftventilators weiter zu bewerten und zu steuern.

14. Luftreinigungsgerät (10) nach Anspruch 1,
    **dadurch gekennzeichnet,**

**dass** der Staubpegelsensor (23) die Staubkonzentration der Umgebung misst, um die Staubmenge zu berechnen, die von der Staubreinigungsvorrichtung (14) insbesondere durch den Elektrofilter aufgefangen wird, wobei, wenn die Menge des aufgesammelten Staubs, der gehalten wird, höher ist als der vorgegebene Wert, die zentrale Verarbeitungseinheit (24) den Alarm ausgibt und den Benutzer daran erinnert, den Elektrofilter zu reinigen, und wobei die Ansammlung des Staubs, die durch die Staubreinigungsvorrichtung (14), insbesondere durch den Elektrofilter gesammelt wird, durch die folgende Gleichung berechnet wird:

Gesamtmenge an Staub, die durch den Elektrofilter gehalten wird =

(Geschwindigkeit des Lüfters x Betriebszeit des Luftreinigungsgerätes (10) x

Staubgehalt der Umgebung) + der gesamte Staub, der vom Elektrofilter des letzten Arbeitsganges gehalten wird.

15. Luftreinigungsgerät (10) nach Anspruch 1,
   **dadurch gekennzeichnet,**
   **dass** die Staubreinigungseinrichtung (14) zum Reinigungs- und Wartungszweck von der gesamten Luftreinigungseinrichtung (10) abnehmbar ist.

16. Luftreinigungsgerät (10) nach Anspruch 1,
   **dadurch gekennzeichnet,**
   **dass** Benutzer neben der Verwendung des Staubpegelsensors (23) und der zentralen Verarbeitungseinheit (24) zur Steuerung der Öffnungs- und Schließbewegung des Ventils (22) auch ihre eigene Bewertung über die Empfindlichkeit verwenden und das Ventil (22) manuell steuern können, anstatt den Staubpegelsensor (23) zu verwenden.

**Revendications**

1. Appareil (10) de purification d'air, comprenant un boîtier (15), où le boîtier (15) inclut une entrée d'air et une sortie d'air, et où les composants suivants sont prévus à l'intérieur du boîtier (15) :

   (i) un appareil d'élimination de poussière (14),
   (ii) une vanne (22) destinée à réguler le trajet d'écoulement d'air à l'intérieur du boîtier (15),
   (iii) un générateur de réactif (16),
   (iv) un noyau de filtration catalytique (17),
   (v) un ventilateur d'extraction destiné à aspirer de l'air,
   (vi) un capteur de niveau de poussière (23), et
   (vii) une unité centrale (24),

   où l'appareil d'élimination de poussière (14) est installé à une position en amont (12) du générateur de réactif (16), la vanne (22) et le noyau de filtration catalytique (17) sont installés à une position en aval (20) du générateur de réactif (16), où le ventilateur d'extraction est installé à une position quelconque dans l'appareil (10) afin d'aspirer de l'air de sorte à créer un écoulement d'air de la position en amont (12) vers la position en aval (20), où, lorsque ladite vanne (22) est fermée, elle se retrouve au même niveau que le noyau de filtration catalytique (17), de sorte que l'air est obligé de s'écouler à travers le noyau de filtration catalytique (17), après avoir traversé l'appareil d'élimination de poussière (14) et le générateur de réactif (16) avant de s'écouler à l'extérieur, où, lorsque la vanne (22) est ouverte, elle devient une ouverture sans résistance à travers laquelle l'air passe, de sorte que l'air pourra alors s'écouler à travers cette ouverture sans résistance au lieu de traverser le noyau de filtration catalytique (17), après avoir traversé l'appareil d'élimination de poussière (14) et le générateur de réactif (16), où le générateur de réactif (16) s'arrête de fonctionner lorsque la vanne (22) est ouverte afin d'empêcher toute fuite de réactif lorsque le noyau de filtration catalytique (17) ne fonctionne pas, et où l'opération d'ouverture et de fermeture de la vanne (22) est commandée par le capteur de niveau de poussière (23) et l'unité centrale (24) de l'appareil (10), de sorte que, lorsque le niveau de poussière, obtenu par le capteur de niveau de poussière (23), est supérieur à une valeur prédéterminée, la vanne est ouverte afin de traiter toutes les particules de poussière dans un premier temps, et lorsque le niveau de poussière ambiant est inférieur à la valeur prédéterminée, la vanne est fermée et l'appareil de purification d'air élimine les polluants en phase gazeuse.

2. Appareil de purification d'air (10) selon la revendication 1, **caractérisé en ce que** l'appareil d'élimination de poussière (14) est agencé de sorte à éliminer les poussières de tailles physiques approximativement égales à ou supérieures à 0,01 μm.

3. Appareil de purification d'air (10) selon la revendication 1, **caractérisé en ce que** l'appareil d'élimination de poussière (14) inclut un filtre électrostatique.

4. Appareil de purification d'air (10) selon la revendication 1, **caractérisé en ce que** l'appareil d'élimination de poussière (14) inclut un filtre à particules aériennes à haute efficacité.

5. Appareil de purification d'air (10) selon la revendication 1, **caractérisé en ce que** lorsque le noyau de filtration catalytique (17) est un filtre de tamis moléculaire, le générateur de réactif (16) est une lampe de stérilisation UV qui peut générer de l'ozone.

6. Appareil de purification d'air (10) selon la revendication 1, **caractérisé en ce que** lorsque le noyau de filtration catalytique (17) est un filtre de tamis moléculaire, le générateur de réactif (16) est un générateur d'oxydant.

7. Appareil de purification d'air (10) selon la revendication 1, **caractérisé en ce que** lorsque le noyau de filtration catalytique (17) est un filtre de tamis moléculaire, le générateur de réactif (16) est un générateur de réactif (16).

8. Appareil de purification d'air (10) selon la revendication 1, **caractérisé en ce que** lorsque le noyau de filtration catalytique (17) est un filtre de dioxyde de titane, le générateur de réactif (16) est un générateur d'oxydant.

9. Appareil de purification d'air (10) selon la revendication 1, **caractérisé en ce que** lorsque le noyau de filtration catalytique (17) est un filtre de dioxyde de titane, le générateur de réactif (16) est une lampe de stérilisation UV et illumine la surface du filtre de dioxyde de titane avec une longueur d'onde efficace.

10. Appareil de purification d'air (10) selon la revendication 1, **caractérisé en ce qu'**un filtre à particules aériennes à haute efficacité est installé au-dessus du filtre de tamis moléculaire, où une lampe de stérilisation UV illumine la surface du filtre à particules aériennes à haute efficacité, et évite tout risque d'incubation bactérienne, sur la surface du filtre à particules aériennes à haute efficacité.

11. Appareil de purification d'air (10) selon la revendication 1, **caractérisé en ce que** le capteur de niveau de poussière (23) est utilisé pour obtenir le niveau de poussière de l'environnement ambiant, où les données de niveau de poussière sont ensuite fournies à l'unité centrale (24), et où l'unité centrale (24) commande l'opération d'ouverture et de fermeture de la vanne (22).

12. Appareil de purification d'air (10) selon la revendication 1, **caractérisé en ce qu'**un capteur de niveau d'odeur (25) et une unité centrale (24) sont inclus.

13. Appareil de purification d'air (10) selon la revendication 12, **caractérisé en ce que** le capteur de niveau d'odeur (25) mesure la concentration des composés organiques volatils de l'environnement, où la concentration est ensuite fournie à l'unité centrale (24) pour une évaluation approfondie et une commande de la vitesse du ventilateur d'extraction.

14. Appareil de purification d'air (10) selon la revendication 1, **caractérisé en ce que** le capteur de niveau de poussière (23) mesure la concentration de poussière de l'environnement afin de calculer la quantité de poussière qui est recueillie par l'appareil d'élimination de poussière (14), notamment le filtre électrostatique, où lorsque la quantité de la poussière accumulée qui est retenue est supérieure à la valeur préétablie, l'unité centrale (24) déclenchera l'alarme et rappelle à l'utilisateur qu'il est nécessaire de nettoyer le filtre électrostatique, et où l'accumulation de la poussière qui est recueillie par l'appareil d'élimination de poussière (14), notamment le filtre électrostatique, est calculée selon l'équation suivante :

Quantité totale de poussière qui est retenue par le filtre électrostatique = (vitesse du ventilateur x durée de fonctionnement de l'appareil de purification d'air (10) x niveau de poussière ambiant) + quantité totale de poussière qui a été retenue par le filtre électrostatique lors de la dernière utilisation.

15. Appareil de purification d'air (10) selon la revendication 1, **caractérisé en ce que** l'appareil d'élimination de poussière (14) peut être retiré de l'ensemble de l'appareil de purification d'air (10) à des fins de nettoyage et de maintenance.

16. Appareil de purification d'air (10) selon la revendication 1, **caractérisé en ce que**, en plus d'employer le capteur de niveau de poussière (23) et l'unité centrale (24) pour commander l'opération d'ouverture et de fermeture de la vanne (22), des utilisateurs peuvent s'appuyer sur leur propre jugement en matière de sensibilité et commander la vanne (22) de manière manuelle, au lieu d'utiliser le capteur de niveau de poussière (23).

Figure 1

EP 2 075 512 B1

```
        ┌────────────────────────────────┐
        │   Start operating the air       │
        │   purification apparatus        │
        └────────────────────────────────┘
                       │
                       ▼
        ┌────────────────────────────────┐
        │ Dust level sensor obtained the  │
        │ level of dust of the surrounding│
        └────────────────────────────────┘
                       │
                       ▼
        ┌────────────────────────────────┐
        │ Central processing unit compare │
        │ the obtained dust level with the│
        │ preset value                    │
        └────────────────────────────────┘
```

Central processing unit gives out alarm to clean the electrostatic precipitator

Yes ◄── Is the accumulate dust level higher than the preset value?

No ▼

Is the dust level higher than the preset value?

No ──► The volatile organic compounds sensor collects the level of the volatile organic compounds of the surrounding

Yes ▼

Open the valve and turn off the reactant generator

Adjusting the speed of the centrifugal fan based on the comparison of the level of volatile organic compounds and the preset value.

Continuously drawing the air from the upstream to the downstream

Figure 2

13

Figure 3

Figure 4

Figure 5

A chart comparing the performance of air purification by the apparatus of present invention and that of the conventional system

EP 2 075 512 B1

—601
—602
—603
—604

605

606
—607
608

Figure 6

EP 2 075 512 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5707005 A